# EUROPEAN PATENT SPECIFICATION

(11) **EP 4 170 976 B1**
(45) Date of publication and mention of the grant of the patent: **03.09.2025**
(21) Application number: 21833400.1
(22) Date of filing: 29.06.2021
(51) Int. Cl.: H04L 41/5054, H04Q 11/00

(54) **ONU SERVICE ACTIVATION METHOD, ELECTRONIC DEVICE, AND COMPUTER-READABLE STORAGE MEDIUM**
ONU-DIENSTAKTIVIERUNGSVERFAHREN, ELEKTRONISCHE VORRICHTUNG UND COMPUTERLESBARES SPEICHERMEDIUM
PROCÉDÉ D'ACTIVATION DE SERVICE ONU, DISPOSITIF ÉLECTRONIQUE, ET SUPPORT DE STOCKAGE LISIBLE PAR ORDINATEUR

(30) Priority: 30.06.2020 CN 202010619575
(43) Date of publication of application: 26.04.2023
(73) Proprietor: ZTE Corporation, Shenzhen, Guangdong 518057 (CN)
(72) Inventor: LI, Xiang, Shenzhen, Guangdong 518057 (CN)
(74) Representative: Zoli, Filippo
(86) International application number: PCT/CN2021/103097
(87) International publication number: WO 2022/002046

(56) References cited:
- WO-A1-2017/177551
- CN-A- 101 969 385
- CN-A- 104 333 462
- CN-A- 104 333 462
- CN-A- 111 328 055
- CN-A- 112 689 210
- US-A1- 2012 294 613
- US-A1- 2012 294 613

## Description

### TECHNICAL FIELD

The present disclosure relates to the technical field of communication.

### BACKGROUND

Gigabit-capable passive optical networks (GPON) technology is a passive optical network access technology based on ITU-T G.9xx standard. A GPON system includes an Optical Line Terminal (OLT) and an Optical Network Unit (ONU).

With the popularization and application of GPON systems in the fixed access network, the networking of GPON systems becomes more and more flexible, and the intercommunication of OLTs and ONUs from different manufacturers is becoming more and more common. Currently, the service activation of an ONU relies on an OLT, due to the indispensable ONU Management and Control Interface (OMCI) message interaction between the OLT and ONU.

Patent literature US2012294613A1 discloses a system for registering an optical network unit (ONU) installed in a passive optical network (PON), including a mobile terminal, a registration server, and an optical line terminal (OLT). The mobile terminal is configured to collect an ONU identification from the ONU, collect a subscriber identification, and transmit the ONU identification and the subscriber identification to a registration server via a communication system.

While the above publication may achieve its intended purpose, there is still a need for a new and improved method for optical network unit (ONU) service activation.

### SUMMARY

According to an aspect of the present disclosure, there is provided a method for optical network unit (ONU) service activation, which is performed by a mobile terminal, the method includes, sending an inquiry request to an ONU, to request the ONU to send inquiry response information carrying device serial number and device capability set data of the ONU to the mobile terminal, in response to the inquiry request; receiving the inquiry response information from the ONU, and sending a data reporting request carrying the device serial number and the device capability set data of the ONU to a network management cloud platform, to request the network management cloud platform to determine an optical line terminal (OLT) corresponding to the ONU according to the device serial number of the ONU, from a plurality of OLTs, and to request the network management cloud platform to determine, according to the device capability set data, first service activation configuration information to be sent to the OLT, and second service activation configuration information to be sent to the mobile terminal; and receiving second service activation configuration information from the network management cloud platform, and sending an upload configuration request carrying the second service activation configuration information to the ONU, to request the ONU to perform service activation configuration in response to the upload configuration request; where the first service activation configuration information is for configuration of the OLT, and the configuration at least comprises registration configuration, and PON port configuration.

According to another aspect of the present disclosure, there is provided a method for optical network unit (ONU) service activation, which is performed by a network management cloud platform, the method includes, receiving a data reporting request carrying device serial number and device capability set data of an ONU from a mobile terminal; determining an optical line terminal (OLT) corresponding to the ONU, from a plurality of OLTs, according to the device serial number of the ONU; determining first service activation configuration information according to the device capability set data of the ONU and sending the first service activation configuration information to the OLT where the first service activation configuration information is for configuration of the OLT, and the configuration at least comprises registration configuration, and PON port configuration; and determining second service activation configuration information according to the device capability set data, and sending the second service activation configuration information to the mobile terminal, to cause the mobile terminal to send an upload configuration request carrying the second service activation configuration information to the ONU.

According to yet another aspect of the present disclosure, there is provided an electronic device, which includes, a memory configured to store a program; and a processor configured to execute the program which when executed by the processor, causes the processor to carry out any one of the methods as described above.

According to yet another aspect of the present disclosure, there is provided a computer-readable storage medium storing a computer-executable program, which when executed by a processor, causes the processor to carry out any one of the methods as described above.

### BRIEF DESCRIPTION OF DRAWINGS

FIG. 1 depicts a schematic diagram showing an architecture of a GPON system according to an embodiment of the present disclosure;
FIG. 2 depicts a flowchart showing a method for ONU service activation according to an embodiment of the present disclosure;
FIG. 3 depicts a flowchart showing a method for ONU service activation according to another embodiment of the present disclosure;
FIG. 4 depicts a flowchart showing a method for ONU service activation according to another embodiment of the present disclosure; and
FIG. 5 depicts a schematic diagram of an electronic device according to an embodiment of the present disclosure.

### DETAILED DESCRIPTION

The purpose, technical scheme and advantages of the present disclosure will become apparent through the following description for various embodiments in conjunction with the drawings. It should be understood that the embodiments described herein are intended to illustrate the present disclosure merely, and are not intended to limit the present disclosure.

It should be understood that in the description of embodiments of the present disclosure, a plurality (or plurality) means more than two; greater than, less than, more than, etc. shall be understood to exclude the number being referred to; and above, below, within, etc. shall be understood to include the number being referred to. Term "first" and "second" if described, are intended for distinguishing technical features, which shall not be understood as indicating or implying relative importance or implicitly indicating the number of the indicated technical features or the order of the indicated technical features.

Service activation for ONU relies on OLT, which results from the indispensable OMCI message interaction between OLT and ONU. However, due to the differences in understanding of standards or human factors, different OLTs from different manufacturers would send different OMCI messages, which brings great obstacles to network operators' intercommunicable networking. Operators have to give up the flexible networking method and turn to the networking with binding of the OLTs and ONUs, which leads to higher cost.

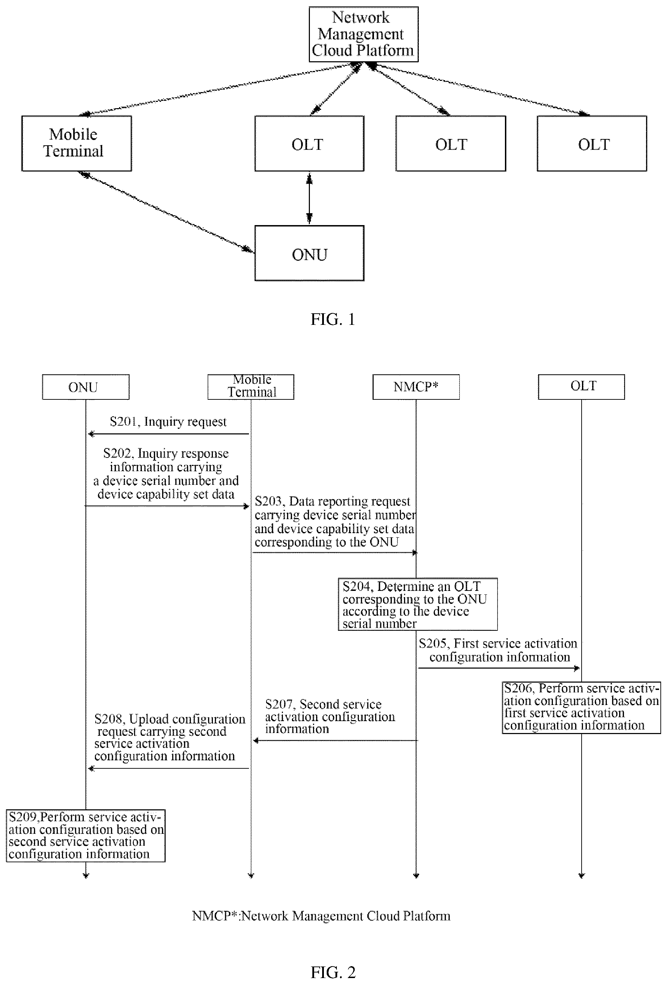

FIG. 1 depicts a schematic diagram showing an architecture of a GPON system. The system can be applied to the method for ONU service activation according to various embodiments of the present disclosure. As shown in FIG. 1, the system includes a network management cloud platform, a mobile terminal, several OLTs and an ONU.

The network management cloud platform is deployed and maintained by a network operator, and the cloud platform substantially serves to activate and manage ONU services. In some embodiments of the present disclosure, the network management cloud platform is configured to: acquire the data of the ONU whose service is to be activated, from the mobile terminal, including identification data such as the serial number of the ONU; broadcast the serial number of the ONU to the OLTs which the network management cloud platform manages, determine the OLT to which the ONU is connected according to the response, and send configuration information for service activation to the OLT and to the mobile terminal.

The mobile terminal is released and maintained by the network operator, and substantially serves to transfer the interactive information between the network management cloud platform and the ONU. In some implementations, an application program (APP) is installed on the mobile terminal, and the login user name and password of the APP are authorized by the network operator. In the embodiment of the present disclosure, the mobile terminal APP is configured to initiate an access request to the network management cloud platform with the login username and password. After the access is completed, the APP can access the local network of ONU by a scan of a QR code or input of the username and password, so as to acquire the serial number, capability set and other data of the ONU. Then the APP reports the data acquired from the ONU to the network management cloud platform, and waits for the network management cloud platform to issue the service activation configuration information. Upon acquiring the service activation configuration information, the APP accesses the local network of the ONU again, and uploads the service activation configuration information to the ONU.

The OLT is deployed and maintained by the network operator. In some embodiments of the present disclosure, the OLT is configured to accept the management of the network management cloud platform, and is responsible for the registration of the ONU and the service configuration of the OLT itself. It should be understood that several OLTs may be arranged in the system, and each OLT is connected with a respective ONU.

In the embodiment of the present disclosure, the ONU is configured to respond to the query from the APP of the mobile terminal and receive the service activation configuration uploaded by the APP.

It should be understood that the network management cloud platform and each network element device in the system shown in FIG. 1 should be powered on and initialized before the process of the method for ONU service activation according to various embodiments of the present disclosure is performed, and then access the network through the optical fiber, so as to transition to the operating state. The ONU whose service is to be activated initializes the capability set data, activates the Socket Server function by default, and waits for the connection by the mobile terminal.

FIG. 2 depicts a flowchart showing a method for ONU service activation according to an embodiment of the present disclosure. As shown in FIG. 2, the method includes but is not limited to the following operations S201- S209.

At S201, an inquiry request is sent to the ONU, by the mobile terminal.

In an implementation, the mobile terminal initiates a Transmission Control Protocol (TCP) connection to the ONU as a Socket Client through the APP. After the connection is completed, the mobile terminal initiates an inquiry request to the ONU to request the ONU for the basic information (including serial number SN, etc.) and the device capability set of the ONU. The message definition of the inquiry can be found in Table 1 below.

**Table 1:**

| Field name | Sub-field Name | Data Type | Value | Remark |
|---|---|---|---|---|
| "jsonrpc" | | String | "2.0" | JSONRPC protocol version number |
| "method" | | String | "GetOnuData Request" | Acquire ONU data |
| "params" | | String | | List of parameters |
| | "Sequence Number" | String | | Serial number |
| | "LOID" | String | | Logical identifier |
| | "eth" | String | | ETH port information |
| | "ip_host" | String | | Wan connection information |
| | "queue" | String | | Scheduling information |
| | "tcont" | String | | Tcont capability set |

At S202, inquiry response information carrying a device serial number and device capability set data are sent to the mobile terminal, by the ONU, in response to the inquiry request from the mobile terminal.

In an implementation, the ONU parses the inquiry request message sent by the mobile terminal, and encapsulates the device serial number and capability set data into the inquiry response message. The definition of the inquiry response message can be found in Table 2 below.

**Table 2:**

| Field name | Sub-field Name | Data Type | Value | Remark |
|---|---|---|---|---|
| "jsonrpc" | | String | "2.0" | JSONRPC protocol version number |
| "result" | | int | | "0" as success, or "1" as failure |
| "params" | | String | | List of parameters |
| | "Sequence Number" | String | | Serial number |
| | "LOID" | String | | Logical identifier |
| | "eth" | String | | ETH port information |
| | "ip_host" | String | | Wan connection information |
| | "queue" | String | | Scheduling information |
| | "tcont" | String | | Tcont capability set |

In an implementation, if the inquiry of the ONU fails, the ONU replies the mobile terminal with a message indicative of the failure in the inquiry. The mobile terminal, after receiving the message indicative of the failure in the inquiry from the ONU, re-initiates the inquiry request message to the ONU. In some examples, the maximum times of requests can be preset, such as 3 times.

At S203, the inquiry response information from the ONU is received, and a data reporting request carrying the device serial number and the device capability set data corresponding to the ONU is sent to the network management cloud platform, by the mobile terminal. The definition of the data reporting request can be found in Table 3 below.

**Table 3:**

| Field name | Sub-field Name | Data Type | Value | Remark |
|---|---|---|---|---|
| "jsonrpc" | | String | "2.0" | JSONRPC protocol version number |
| "method" | | String | "UploadOnuDat aRequest" | Report ONU data |
| "params" | | String | | List of parameters |
| | "Sequence Number" | String | | Serial number |
| | "LOID" | String | | Logical identifier |
| | "eth" | String | | ETH port information |
| | "ip_host" | String | | Wan connection information |
| | "queue" | String | | Scheduling information |
| | "tcont" | String | | Tcont capability set |
| | "token" | String | | Authorized communication token |

The mobile terminal reports the device serial number, device capability set data and other information received from the ONU to the network management cloud platform. Then, the network management cloud platform sends configuration information to the ONU and the OLT connected with the ONU based on the information reported by the mobile terminal, which information corresponds to the device serial number and device capability set data of the ONU whose service is to be activated.

At S204, an OLT corresponding to the ONU is determined, according to the device serial number, by the network management cloud platform.

The network management cloud platform, after receiving the data reporting request from the mobile terminal carrying the device serial number and the device capability set data, parses the data reported by the mobile terminal. In an implementation, if the parse fails, the network management cloud platform sends a reply message indicating the failure of the reporting to the mobile terminal. If the parse is successful, the network management cloud platform sends a reply message indicating the success of the reporting to the mobile terminal. The definition of the reply message for data reporting request can be found in Table 4 below.

**Table 4:**

| Field name | Sub-field Name | Data Type | Value | Remark |
|---|---|---|---|---|
| "jsonrpc" | | String | "2.0" | JSONRPC protocol version number |
| "result" | | int | | "0" as success, or "1" as failure |

When the data reported by the mobile terminal is successfully parsed, the network management cloud platform determines the OLT corresponding to the ONU whose service is to be activated according to the received device serial number, so as to issue the corresponding service activation configuration information to the OLT.

As an implementation, the determination of the OLT corresponding to the ONU according to the device serial number at S204 can be achieved through a broadcast of the device serial number of the ONU to several OLTs in the system by the network management cloud platform. The definition of the broadcast message can be found in Table 5 below. An OLT, after receiving the device serial number broadcast by the network management cloud platform, matches the device serial number stored in the local device list. The device serial number broadcasted by the network management found in the local device list when matching, indicates that the matching is successful, and a correspondence between the matched OLT and the ONU whose service is to be activated presents. The matched OLT replies to the network management cloud platform with matching response information indicating the success of the matching. The definition of the matching response information can be found in Table 6 below. The network management cloud platform, after receiving the matching response information, determines the OLT that sent the matching response information as the OLT corresponding to the ONU whose service is to be activated.

In an implementation, the matching response information carries the IP address corresponding to the OLT that sent the matching response information. And the network management cloud platform sends a first service activation configuration information, based on the IP address, to the OLT corresponding to the IP address.

**Table 5:**

| Field name | Sub-field Name | Data Type | Value | Remark |
|---|---|---|---|---|
| "jsonrpc" | | String | "2.0" | JSONRPC protocol version number |
| "method" | | String | "Search_OLT" | Search OLT |
| "params" | | String | | List of parameters |
| | "Sequence Number" | String | | Serial number of ONU |

**Table 6: Definition of Matching Response Information**

| Field name | Sub-field Name | Data Type | Value | Remark |
|---|---|---|---|---|
| "jsonrpc" | | String | "2.0" | JSONRPC protocol version number |
| "result" | | int | | "0" as success, or "1" as failure |
| "params" | | String | | List of parameters |
| | "IP" | String | | IP address of OLT |

At S205, the first service activation configuration information is determined according to the device capability set data, and is sent to the OLT, by the network management cloud platform.

The cloud platform determines the first service activation configuration information to be sent to the OLT, according to the received ONU capability set data. The first service activation configuration information may include information such as registration template, ONU serial number, Alloc ID and Gemport ID, etc. The definition of the first service activation configuration information can be found in Table 7 below.

**Table 7:**

| Field name | Sub-field Name | Data Type | Value | Remark |
|---|---|---|---|---|
| "jsonrpc" | | String | "2.0" | JSONRPC protocol version number |
| "method" | | String | "Config_OLT" | Report ONU data |
| "params" | | String | | List of parameters |
| | "ONU_ID" | String | | ONU number |
| | "Sequence Number" | String | | ONU serial number |
| | "model" | String | | Registration template |
| | "alloc id" | String | | Specified uplink transmission time slot and bandwidth. |
| | "gemport id" | String | | Gempord identification number |
| | "pon_vlan" | String | | OLT PON port Vlan |

At S206, the first service activation configuration information is received from the network management cloud platform, and a service activation configuration is performed according to the first service activation configuration information, by the OLT.

The OLT receives the first service activation configuration information sent by the network management cloud platform, and parses the received first service activation configuration information. After the parse is completed, a related configuration such as registration configuration, PON port configuration, or the like, is performed by the OLT according to the registration template, ONU serial number, Alloc ID, Gemport ID and other information contained in the first service activation configuration information.

In an implementation, the OLT sends response information indicating the result of the configuration by the OLT to the network management cloud platform after the configuration is completed. The definition of the response information indicating the result of the configuration by the OLT can be found in Table 8 below.

**Table 8:**

| Field name | Sub-field Name | Data Type | Value | Remark |
|---|---|---|---|---|
| "jsonrpc" | | String | "2.0" | JSONRPC protocol version number |
| "result" | | int | | "0" as success, or "1" as failure |

At S207, a second service activation configuration information is determined according to the device capability set data, and is sent to the mobile terminal, by the network management cloud platform.

The cloud platform determines the second service activation configuration information to be transferred to the ONU according to the received ONU capability set data. The second service activation configuration information may include information such as port information, Alloc ID, Gemport ID, VLAN, etc. The definition of the second service activation configuration information can be found in Table 9 below.

**Table 9:**

| Field name | Sub-field Name | Data Type | Value | Remark |
|---|---|---|---|---|
| "jsonrpc" | | String | "2.0" | JSONRPC protocol version number |
| "method" | | String | "Config_ONU" | Report ONU data |
| "params" | | String | | List of parameters |
| | "UNI_config1" | String | | ONU user side port +vlan configuration data |
| | "UNI_config2" | String | | ONU user side port +vlan configuration data |
| | "ANI_config1" | String | | ONU user side port +vlan configuration data |
| | "ANI_config1" | | | ONU network side port +vlan configuration data |
| | "ANI_config3" | String | | ONU network side port +vlan configuration data |
| | "gemport id" | String | | Available Gemport id for ONU |
| | "alloc id" | String | | Available alloc id for ONU |

At S208, the second service activation configuration information is received from the network management cloud platform, and an upload configuration request carrying the second service activation configuration information is sent to the ONU, by the mobile terminal.

In some embodiments of the present disclosure, the network management cloud platform sends the second service activation configuration information to the mobile terminal. The mobile terminal, after receiving the second service activation configuration information, sends a reply message indicating the success/failure of the receiving of the second service activation configuration information to the network management cloud platform. The definition of the reply message indicating the success or failure of the receiving of the second service activation configuration information can be found in Table 10 below.

**Table 10:**

| Field name | Sub-field Name | Data Type | Value | Remark |
|---|---|---|---|---|
| "jsonrpc" | | String | "2.0" | JSONRPC protocol version number |
| "result" | | int | | "0" as success, or "1" as failure |

The mobile terminal, after successfully receiving the second service activation configuration information, encapsulates the second service activation configuration information into the upload configuration request information and sends the upload configuration request information to the ONU. The definition of the upload configuration request information can be found in Table 11 below.

**Table 11:**

| Field name | Sub-field Name | Data Type | Value | Remark |
|---|---|---|---|---|
| "jsonrpc" | | String | "2.0" | JSONRPC protocol version number |
| "method" | | String | "Config_ONU" | Report ONU data |
| "params" | | String | | List of parameters |
| | "UNI_config1" | String | | ONU user side port +vlan configuration data |
| | "UNI_config2" | String | | ONU user side port +vlan configuration data |
| | "ANI_config1" | String | | ONU user side port +vlan configuration data |
| | "ANI_config1" | | | ONU network side port +vlan configuration data |
| | "ANI_config3" | String | | ONU network side port +vlan configuration data |
| | "gemport id" | String | | Available Gemport id for ONU |
| | "alloc id" | String | | Available alloc id for ONU |

At S209, the upload configuration request information carrying the second service activation configuration information is received from the mobile terminal, and service activation configuration is performed according to the second service activation configuration information, by the ONU.

The ONU, after receiving the upload configuration request sent by the mobile terminal, replies to the mobile terminal with a message indicating the success/failure of receiving the upload configuration request information. See Table 12 below for the definition for the message.

**Table 12:**

| Field name | Sub-field Name | Data Type | Value | Remark |
|---|---|---|---|---|
| "jsonrpc" | | String | "2.0" | JSONRPC protocol version number |
| "result" | | int | | "0" as success, or "1" as failure |

The ONU, after successfully receiving the upload configuration request sent by the mobile terminal, parses the second service activation configuration information encapsulated in the upload configuration request information in response to the upload configuration request, and performs the corresponding service activation configuration after the parse is performed, to complete the ONU service activation.

In an implementation, the ONU after completing the service activation configuration, sends response information indicating the result of configuration by the ONU to the mobile terminal. The definition of the response information can be found in Table 13 below. If the result of configuration by the ONU shows a failure in the configuration, the S208 and S209 can be repeatedly performed, and the maximum times of the performance is preset (for example, to 3 times).

**Table 13:**

| Field name | Sub-field Name | Data Type | Value | Remark |
|---|---|---|---|---|
| "jsonrpc" | | String | "2.0" | JSONRPC protocol version number |
| "method" | | String | "ConfigResult" | Report results |
| "params" | | String | | |
| | "result" | String | | "0" as success, or "1" as failure |

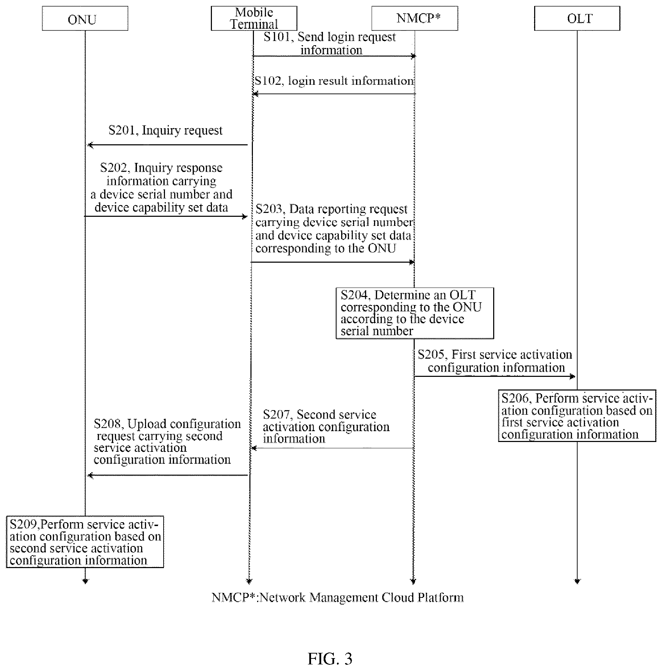

As shown in FIG. 3, in an implementation, the method further includes S101 and S102 before S201 is performed.

At S101, login request information is sent to the network management cloud platform by the mobile terminal.

At S102, login result information is replied to the mobile terminal, by the network management cloud platform.

In some implementations, a user enters the login interface of the network management cloud platform through the APP of the mobile terminal, input the login user name and password (this user name and password are authorized by the network operator) in the login interface, and click the login button to send the login request information to the network management cloud platform. The definition of the login request information can be found in Table 14 below.

**Table 14:**

| Field name | Sub-field Name | Data Type | Value | Remark |
|---|---|---|---|---|
| "jsonrpc" | | String | "2.0" | JSONRPC protocol version number |
| "method" | | String | "Login" | Login request |
| "params" | "UserName" | String | | User name |
| | "Password" | String | | Password |

The network management cloud platform, after receiving the login request information from the APP of the mobile terminal, acquires the login username and password, determines whether the login username and password are authorized, and replies to the mobile terminal with the login result information.

In an implementation, the login result information includes a result of the login and a communication token randomly generated when the login is completed. The data reporting request at S203 and the response information indicating the result of configuration by the ONU at S209 respectively carry a communication token that is to be matched with the communication token in the network management cloud platform, to identify the authority of the mobile terminal. The definition of the login result information can be found in Table 15 below.

**Table 15:**

| Field name | Sub-field Name | Data Type | Value | Remark |
|---|---|---|---|---|
| "jsonrpc" | | String | "2.0" | JSONRPC protocol version number |
| "result" | | int | | "0" as success, or "1" as failure |
| "params" | | String | | |
| | "token" | String | | Authorized communication token |

The mobile terminal, after receiving the login result information indicating the success of login, performs S201 and sends an inquiry request to the ONU.

In an implementation, the method according to some embodiments of the present disclosure further includes, establishing a local connection between the mobile terminal and the ONU, for sending the inquiry request to the ONU and receiving the inquiry response information from the ONU.

In some implementations, the local connection established between the mobile terminal and ONU is a Wi-Fi connection. The local connection between the mobile terminal and the ONU is established as follows.

In a possible implementation, when the login result information received from the network management cloud platform by the mobile terminal indicates the success of the login, the mobile terminal acquires the QR code information of ONU through the QR code scanning function in the APP, and establishes a local connection with ONU according to the QR code information.

In another possible implementation, the network connection identifier and login password information corresponding to the ONU whose service is to be activated can be manually input into the mobile terminal, and the local connection with the ONU can be established according to the acquired network connection identifier and login password information.

In an implementation, when the mobile terminal successfully accesses the network of ONU, the network access information of ONU is stored in the mobile terminal.

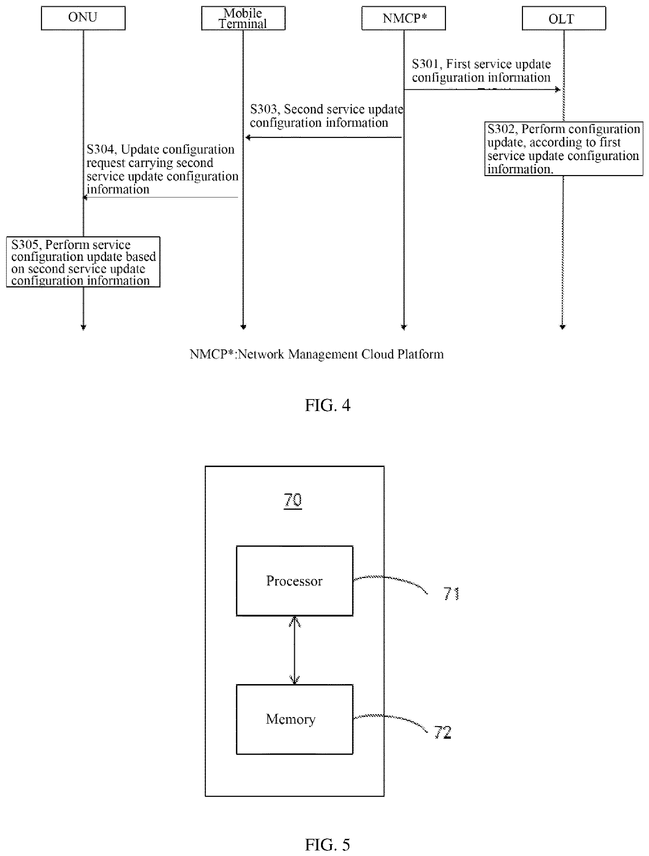

In some implementations, if the network service subscribed by the customer changes, or the network operator wishes to adjust the GPON system configuration, the network operator can adjust the service configuration at any time through the network management cloud platform and apply the configuration to the GPON system under the management of the platform. Based on the above scenario, there is further provided another method for ONU service activation according to an embodiment of the present disclosure. As shown in FIG. 4, the method for ONU service activation includes the following operations S301 to S305.

At S301, first service update configuration information is sent to the OLT by the network management cloud platform.

In an embodiment, the network management cloud platform sends the first service update configuration information to the OLT after the service is changed, and the first service update configuration information includes the registration template, serial number, Alloc ID, Gemport ID after the service is changed, or the like.

At S302, a configuration update is performed by the OLT, according to the first service update configuration information.

In an implementation, the OLT parses the message, determines whether the configuration to be updated is a duplicate configuration, and if so, the OLT replies to the network management cloud platform that the configuration is successful. And if the configuration to be updated is not a duplicate configuration, the difference between the new configuration and the configuration currently in effect is figured out, and an incremental configuration is performed. Then the OLT replies to the network management cloud platform with a message indicating the result of the incremental configuration after the configuration is completed.

At S303, a second service update configuration information is sent to the mobile terminal, by the network management cloud platform.

In an implementation, the network management cloud platform sends the second service update configuration information to the mobile terminal after the service is changed, and the second service update configuration information includes the port, Alloc ID, Gemport ID, VLAN after the service is changed, or the like.

At S304, an update configuration request carrying the second service update configuration information is sent to the ONU, by the mobile terminal.

In an implementation, the mobile terminal can access the local network of the ONU again according to the previously saved network access information of the ONU side. The mobile terminal sends an update configuration request carrying the second service update configuration information to the ONU through the local network.

At S305, the second service update configuration information from the network management cloud platform, is received by the ONU. The update configuration request carrying the second service update configuration information is sent to the ONU, to instruct the ONU to update the service configuration in response to the update configuration request.

In an implementation, the ONU parses the configuration message, completes the internal configuration, and replies to the mobile terminal with a message indicating the result of the configuration. The mobile terminal replies to the network management cloud platform with a message indicating the result of the configuration update, according to the result of the configuration fed back by the ONU.

By means of the operations of the methods in the embodiments as described above, the service configuration can be adjusted at any time through the mobile terminal and the network management cloud platform, and the operation is convenient.

According to the technical scheme as set forth in various embodiments of the present disclosure, the service activation and maintenance of ONU is no longer relied on the OLT manufacturers, and is no longer limited by the differences of OMCI messages of various manufacturers. The service activation and maintenance can be achieved simply by the network management cloud platform and the APP of the mobile terminal of operators, which eliminates the "necessary" OMCI message interaction between traditional OLTs and ONUs, which completely gets rid of the constraint of OLT manufacturers on operators' intercommunicable networking, and solves the problem of device intercommunication of different manufacturers in the existing technology.

There is further provided an electronic device 70 according to an embodiment of the present disclosure. As shown in FIG. 5, the electronic device 70 includes but is not limited to a processor 71 and a memory 72.

The memory 72 is configured to store programs.

The processor 71 is configured to execute the program stored in the memory 72, and when the program stored in the memory 72 is executed by the processor 71, causes the processor 71 to carry out the method according to any one of the embodiments described above.

The processor 71 and the memory 72 may be connected by a bus or other means.

The memory 72, as a non-transient computer-readable storage medium, can be configured to store non-transitory software programs and non-transitory computer-executable programs, such as the method for ONU service activation described in various embodiments of the present disclosure. The processor 71 executes the non-transitory software programs and instructions stored in the memory 72, and the processor 71 is caused to carry out the method for ONU service activation as described above.

The memory 72 includes a program storage section and a data storage section, in which the program storage section stores an operating system and application programs for performing at least one operation, and data storage section may store program of the method for ONU service activation as described above. In addition, the memory 72 includes a high-speed random-access memory and a non-transitory memory, such as at least one disk memory device, a flash memory device, or other non-transitory solid-state memory devices. In some implementations, the memory 72 includes memories remotely located relative to the processor 71, and these remote memories are connected to the processor 71 through a network. Examples of the above networks include, but are not limited to, the Internet, intranet, local area network, mobile communication network, and combinations thereof.

The non-transitory software programs and instructions for carrying out the above method for ONU service activation are stored in the memory 72, which when executed by one or more processors 71, causes the processor to carry out the above method for ONU service activation, for example, to carry out S201 to S209 described in conjunction with FIG. 2, S101 to S209 described in conjunction with FIG. 3, or S301 to S305 described in conjunction with FIG. 4.

There is further provided a computer-readable storage medium according to an embodiment of the present disclosure, which stores a computer program, which when executed by a processor, causes the processor to carry out at least one operation of the method for ONU service activation as described above.

In an embodiment, the computer-readable storage medium stores computer-executable instructions, which when executed by one or more control processors, for example, by a processor 71 in the above-described electronic device 70, causes the processor(s) 71 to carry out the method for ONU service activation as described above, for example, to carry out S201 to S209 described in conjunction with FIG. 2, S101 to S209 described in conjunction with FIG. 3, or S301 to S305 described in conjunction with FIG. 4.

The above-described embodiments are only schematic, in which the units illustrated as separate components may or may not be physically separated, that is, they may be located in one place or distributed over several network units. Some or all of the modules can be selected according to the practical needs to achieve the purpose of an embodiment.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules or other data. Computer storage media include, but are not limited to, RAM(Random Access Memory), ROM(Read-Only Memory), EEPROM (Electrically Erasable Programmable Read Only Memory), flash memory or other memory technologies, CD-ROM (compact disc read-only memory), digital versatile disc (DVD) or other optical disc storage, magnetic box, magnetic tape, magnetic disc storage or other magnetic storage devices, or any other medium that can be used to store desired information and can be accessed by a computer. Furthermore, it is well known to a person having ordinary skills in the art that communication media usually contains computer-readable instructions, data structures, program modules or other data in modulated data signals such as carrier waves or other transmission mechanisms, and can include any information delivery media.

## Claims

1. A method for optical network unit, ONU, service activation, which is performed by a mobile terminal, the method comprising,
sending an inquiry request to an ONU (S201), to request the ONU to send inquiry response information carrying a device serial number and device capability set data of the ONU to the mobile terminal, in response to the inquiry request (S202);
receiving the inquiry response information from the ONU, and sending a data reporting request carrying the device serial number and the device capability set data of the ONU to a network management cloud platform (S203), to request the network management cloud platform to determine an optical line terminal ,OLT, corresponding to the ONU according to the device serial number of the ONU, from a plurality of OLTs (S204), and to request the network management cloud platform to determine, according to the device capability set data, first service activation configuration information to be sent to the OLT (S205), and second service activation configuration information to be sent to the mobile terminal (S207); and
receiving second service activation configuration information from the network management cloud platform, and sending an upload configuration request carrying the second service activation configuration information to the ONU (S208), to request the ONU to perform service activation configuration in response to the upload configuration request (S209);
wherein, the first service activation configuration information is for configuration of the OLT, and the configuration at least comprises registration configuration, and PON port configuration.

2. The method of claim 1, further comprising,
sending login request information to the network management cloud platform (S101); and
sending the inquiry request to the ONU (S201) in response to a reception of a message indicating a success of login replied by the network management cloud platform.

3. The method of claim 1, further comprising,
establishing a local connection with the ONU, for transmission of the inquiry request to the ONU and reception of the inquiry response information from the ONU.

4. The method of claim 3, wherein, the establishment of a local connection with the ONU, comprising,
acquiring QR code information from the ONU, and establishing a local connection with the ONU according to the QR code information; or
acquiring a network connection identifier and login password information corresponding to the ONU, and establishing a local connection with the ONU according to the network connection identifier and the login password information.

5. The method of claim 1, further comprising,
receiving second service update configuration information from the network management cloud platform; and
sending an update configuration request carrying the second service update configuration information to the ONU, to request the ONU to update the service configuration in response to the update configuration request.

6. A method for optical network unit, ONU, service activation, which is performed by a network management cloud platform, comprising,
receiving a data reporting request carrying device serial number and device capability set data of an ONU from a mobile terminal;
determining an optical line terminal, OLT, corresponding to the ONU, from a plurality of OLTs according to the device serial number of the ONU;
determining first service activation configuration information according to the device capability set data of the ONU and sending the first service activation configuration information to the OLT; wherein, the first service activation configuration information is for configuration of the OLT, and the configuration at least comprises registration configuration, and PON port configuration; and
determining second service activation configuration information according to the device capability set data, and sending the second service activation configuration information to the mobile terminal, to cause the mobile terminal to send an upload configuration request carrying the second service activation configuration information to the ONU.

7. The method of claim 6, wherein, the determination of an OLT corresponding to the ONU, from a plurality of OLTs, according to the device serial number of the ONU, comprises,
broadcasting the device serial number of the ONU to the plurality of OLTs; and
receiving matching response information from an OLT of the plurality of OLTs, and determining the OLT sending the matching response information as the OLT corresponding to the ONU.

8. The method of claim 7, wherein, the matching response information carries an IP address corresponding to the OLT sending the matching response information; and
the sending of the first service activation configuration information to the OLT comprises, sending, according to the IP address, the first service activation configuration information to the OLT corresponding to the IP address.

9. The method of claim 6, further comprising,
sending first service update configuration information to the OLT (S301), to cause the OLT to perform configuration update according to the first service update configuration information; and
sending second service update configuration information to the mobile terminal (S303), to cause the mobile terminal to send an update configuration request carrying the second service update configuration information to the ONU.

10. An electronic device (70), comprising,
a memory (72) configured to store a program; and
a processor (71) configured to execute the program which when executed by the processor (71), causes the processor (71) to carry out the method of any one of claim 1 to claim 9.

11. A computer-readable storage medium storing a computer-executable program which, when executed by a processor, causes the processor to carry out the method of any one of claim 1 to claim 9.

12. A computer program comprising instructions which, when the program is executed by a computer, cause the computer to carry out the method of any of claim 1 to claim 9.

## Patentansprüche

1. Verfahren zur Dienstaktivierung einer optischen Netzeinheit, ONU, das von einem mobilen Endgerät durchgeführt wird, das Verfahren umfassend,
Senden einer Abfrageanforderung an eine ONU (S201), um die ONU aufzufordern, Abfrageantwortinformationen, die eine Vorrichtungsseriennummer und Vorrichtungsfähigkeitsdaten der ONU enthalten, als Antwort auf die Abfrageanforderung (S202) an das mobile Endgerät zu senden;
Empfangen der Abfrageantwortinformationen von der ONU und Senden einer Datenberichtsanforderung, die die Vorrichtungsseriennummer und die Vorrichtungsfähigkeitsdaten der ONU enthält, an eine Netzmanagement-Cloudplattform (S203), um die Netzmanagement-Cloudplattform aufzufordern, ein optisches Leitungsendgerät, OLT, das der ONU entspricht, gemäß der Vorrichtungsseriennummer der ONU aus einer Vielzahl von OLTs zu bestimmen (S204), und um die Netzmanagement-Cloudplattform aufzufordern, gemäß den Vorrichtungsfähigkeitssatzdaten erste Dienstaktivierung-Konfigurationsinformationen, die an das OLT zu senden sind (S205), und zweite Dienstaktivierung-Konfigurationsinformationen, die an das mobile Endgerät zu senden sind (S207), zu bestimmen; und
Empfangen von zweiten Dienstaktivierung-Konfigurationsinformationen von der Netzmanagement-Cloudplattform, und Senden einer Upload-Konfigurationsanforderung, die die zweiten Dienstaktivierung-Konfigurationsinformationen enthalten, an die ONU (S208), um die ONU aufzufordern, die Dienstaktivierungskonfiguration als Reaktion auf die Upload-Konfigurationsanforderung durchzuführen (S209);
wobei die ersten Dienstaktivierung-Konfigurationsinformationen zur Konfiguration des OLT ist und die Konfiguration zumindest Registrierungskonfiguration und PON-Port-Konfiguration umfasst.

2. Verfahren nach Anspruch 1, ferner umfassend:
Senden von Anmeldeanforderungsinformationen an die Netzmanagement-Cloudplattform (S101); und Senden der Abfrageanforderung an die ONU (S201) als Reaktion auf einen Empfang einer Nachricht, die einen Erfolg einer Anmeldung angibt, die von der Netzmanagement-Cloudplattform beantwortet wird.

3. Verfahren nach Anspruch 1, ferner umfassend:
Herstellen einer lokalen Verbindung mit der ONU, zur Übertragung der Abfrage an die ONU und zum Empfang der Antwortinformationen von der ONU.

4. Verfahren nach Anspruch 3, wobei das Herstellen einer lokalen Verbindung mit der ONU Folgendes umfasst,
Erfassen von QR-Code-Informationen von der ONU und Herstellen einer lokalen Verbindung mit der ONU gemäß den QR-Code-Informationen; oder
Erfassen einer Netzverbindungskennung und von Anmeldepasswortinformationen, die der ONU entsprechen, und Herstellen einer lokalen Verbindung mit der ONU gemäß der Netzverbindungskennung und den Anmeldepasswortinformationen.

5. Verfahren nach Anspruch 1, ferner umfassend:
Empfangen von zweiten Dienstaktualisierung-Konfigurationsinformationen von der Netzmanagement-Cloudplattform, und
Senden einer Aktualisierungskonfigurationsanforderung, die die zweiten Dienstaktualisierung-Konfigurationsinformationen enthält, an die ONU, um die ONU aufzufordern, die Dienstkonfiguration als Reaktion auf die Aktualisierungskonfigurationsanforderung zu aktualisieren.

6. Verfahren zur Dienstaktivierung einer optischen Netzeinheit, ONU, das von einer Netzmanagement-Cloudplattform durchgeführt wird, umfassend
Empfangen einer Datenberichtsanforderung, die eine Vorrichtungsseriennummer und Vorrichtungsfähigkeitssatzdaten einer ONU von einem mobilen Endgerät enthält;
Bestimmen eines optischen Leitungsendgeräts OLT, das der ONU entspricht, aus einer Vielzahl von OLTs gemäß der Vorrichtungsseriennummer der ONU;
Bestimmen der ersten Dienstaktivierung-Konfigurationsinformationen gemäß den Vorrichtungsfähigkeitssatzdaten der ONU und Senden der ersten Dienstaktivierung-Konfigurationsinformationen an das OLT; wobei die ersten Dienstaktivierung-Konfigurationsinformationen zur Konfiguration des OLT sind und die Konfiguration mindestens Registrierungskonfiguration und PON-Port-Konfiguration umfasst; und
Bestimmen von zweiten Dienstaktivierung-Konfigurationsinformationen gemäß den Vorrichtungsfähigkeitssatzdaten und Senden der zweiten Dienstaktivierung-Konfigurationsinformationen an das mobile Endgerät, um das mobile Endgerät zu veranlassen, eine Upload-Konfigurationsanforderung mit den zweiten Dienstaktivierung-Konfigurationsinformationen an die ONU zu senden.

7. Verfahren nach Anspruch 6, wobei das Bestimmen eines OLT, das der ONU entspricht, aus einer Vielzahl von OLTs gemäß der Vorrichtungsseriennummer der ONU Folgendes umfasst
Ausstrahlen der Vorrichtungsseriennummer der ONU an die Vielzahl von OLTs; und
Empfangen von übereinstimmenden Antwortinformationen von einem OLT aus der Vielzahl von OLTs und Bestimmen des OLT, das die übereinstimmenden Antwortinformationen sendet, als das OLT, das der ONU entspricht.

8. Verfahren nach Anspruch 7, wobei die übereinstimmenden Antwortinformationen eine IP-Adresse enthalten, die dem OLT entspricht, das die übereinstimmenden Antwortinformationen sendet; und
das Senden der ersten Dienstaktivierung-Konfigurationsinformationen an das OLT ein Senden, gemäß der IP-Adresse, der ersten Dienstaktivierung-Konfigurationsinformationen an das OLT umfasst, das der IP-Adresse entspricht.

9. Verfahren nach Anspruch 6, ferner umfassend:
Senden erster Dienstaktualisierung-Konfigurationsinformationen an das OLT (S301), um das OLT zu veranlassen, eine Konfigurationsaktualisierung gemäß den ersten Dienstaktualisierung-Konfigurationsinformationen durchzuführen; und
Senden von zweiten Dienstaktualisierung-Konfigurationsinformationen an das mobile Endgerät (S303), um das mobile Endgerät zu veranlassen, eine Aktualisierungskonfigurationsanforderung mit den zweiten Dienstaktualisierung-Konfigurationsinformationen an die ONU zu senden.

10. Elektronische Vorrichtung (70), umfassend:
einen Speicher (72), der konfiguriert ist, um ein Programm zu speichern; und
einen Prozessor (71), der konfiguriert ist, um das Programm auszuführen, das, wenn es von dem Prozessor (71) ausgeführt wird, den Prozessor (71) veranlasst, das Verfahren nach einem der Ansprüche 1 bis 9 durchzuführen.

11. Computerlesbares Speichermedium, das ein computerausführbares Programm speichert, das, wenn es von einem Prozessor ausgeführt wird, den Prozessor veranlasst, das Verfahren nach einem der Ansprüche 1 bis 9 durchzuführen.

12. Computerprogramm, umfassend Anweisungen, die, wenn das Programm von einem Computer ausgeführt wird, den Computer veranlassen, das Verfahren nach einem der Ansprüche 1 bis 9 durchzuführen.

## Revendications

1. Procédé d'activation du service de l'unité de réseau optique, ONU, effectué par un terminal mobile, le procédé comprenant,
l'envoi d'une demande de renseignements à une ONU (S201), afin de demander à l'ONU d'envoyer au terminal mobile des informations de réponse à la demande de renseignements contenant le numéro de série de l'appareil et les données d'ensemble relatives aux capacités de l'appareil de l'ONU, en réponse à la demande de renseignements (S202) ;
la réception des informations de réponse à la demande provenant de l'ONU, et l'envoi d'une demande de communication des données contenant le numéro de série de l'appareil et les données d'ensemble relatives aux capacités de l'appareil de l'ONU à une plateforme cloud de gestion de réseau (S203), afin de demander à la plateforme cloud de gestion de réseau de déterminer un terminal de ligne optique OLT correspondant à l'ONU en fonction du numéro de série de l'appareil de l'ONU, parmi une pluralité d'OLT (S204), et demander à la plateforme cloud de gestion du réseau de déterminer, en fonction des données d'ensemble relatives aux capacités de l'appareil, les informations relatives à la configuration de la première activation du service à envoyer à l'OLT (S205) et les informations relatives à la configuration de la deuxième activation du service à envoyer au terminal mobile (S207) ; et
la réception des informations relatives à la configuration de la deuxième activation du service provenant de la plateforme cloud de gestion du réseau, et l'envoi d'une demande de configuration de téléchargement contenant les informations relatives à la configuration de la deuxième activation du service à l'ONU (S208), afin de demander à l'ONU d'effectuer la configuration d'activation du service en réponse à la demande de configuration de téléchargement (S209) ;
dans lequel, les informations relatives à la configuration de la première activation du service sont destinées à la configuration de l'OLT, et la configuration comprend au moins la configuration d'enregistrement et la configuration du port PON.

2. Procédé selon la revendication 1, comprenant en outre,
l'envoi des informations de demande de connexion à la plateforme cloud de gestion du réseau (S101) ; et l'envoi de la demande de renseignements à l'ONU (S201) en réponse à la réception d'un message indiquant le succès de la connexion, renvoyé par la plateforme cloud de gestion du réseau.

3. Procédé selon la revendication 1, comprenant en outre,
l'établissement d'une connexion locale avec l'ONU, afin de transmettre la demande de renseignements à l'ONU et de recevoir les informations de réponse à la demande provenant de l'ONU.

4. Procédé selon la revendication 3, dans lequel l'établissement d'une connexion locale avec l'ONU comprend :
l'obtention d'informations du code QR auprès de l'ONU et l'établissement d'une connexion locale avec l'ONU en fonction des informations du code QR ; ou
l'obtention d'un identifiant de connexion réseau et des informations de mot de passe d'accès correspondant à l'ONU, et l'établissement d'une connexion locale avec l'ONU en fonction de l'identifiant de connexion réseau et des informations de mot de passe d'accès.

5. Procédé selon la revendication 1, comprenant en outre,
la réception des informations relatives à la configuration de la deuxième mise à jour du service depuis la plateforme cloud de gestion de réseau ; et
l'envoi d'une demande de mise à jour de la configuration contenant les informations relatives à la configuration de la deuxième mise à jour du service à l'ONU, afin de demander à l'ONU de mettre à jour la configuration du service en réponse à la demande de configuration de la mise à jour.

6. Procédé d'activation du service de l'unité de réseau optique, ONU, effectué par une plateforme cloud de gestion du réseau, le procédé comprenant,
la réception d'une demande de communication des données contenant le numéro de série de l'appareil et les données d'ensemble relatives aux capacités de l'appareil d'une ONU à partir d'un terminal mobile,
la détermination d'un terminal de ligne optique, OLT, correspondant à l'ONU à partir d'une pluralité d'OLT en fonction du numéro de série de l'appareil de l'ONU ;
la détermination des informations relatives à la configuration de la première activation du service en fonction des données d'ensemble relatives aux capacités de l'appareil de l'ONU et l'envoi des informations relatives à la configuration de la première activation du service à l'OLT ; dans lequel les informations relatives à la configuration de la première activation du service sont destinées à la configuration de l'OLT, et la configuration comprend au moins la configuration d'enregistrement et la configuration du port PON ; et
la détermination les informations relatives à la configuration de la deuxième activation du service en fonction des données d'ensemble relatives aux capacités de l'appareil, et l'envoi des informations relatives à la configuration de la deuxième activation du service au terminal mobile, afin que celui-ci envoie à l'ONU une demande de configuration de téléchargement contenant les informations relatives à la configuration de la deuxième activation du service.

7. Procédé selon la revendication 6, dans lequel, la détermination d'un terminal de ligne optique OLT correspondant à l'ONU à partir d'une pluralité d'OLT en fonction du numéro de série de l'appareil de l'ONU, comprend :
la diffusion du numéro de série de l'appareil de l'ONU à la pluralité d'OLT ; et
la réception des informations de réponse correspondantes provenant d'un OLT parmi la pluralité d'OLT, et la détermination de l'OLT qui envoie les informations de réponse correspondantes est l'OLT correspondant à l'ONU.

8. Procédé selon la revendication 7, dans lequel les informations de réponse correspondantes contiennent une adresse IP correspondant à l'OLT qui envoie les informations de réponse correspondantes ; et
l'envoi des informations relatives à la configuration de la première activation du service à l'OLT comprend, l'envoi, en fonction de l'adresse IP, des les informations relatives à la configuration de la première activation du service à l'OLT correspondant à l'adresse IP.

9. Procédé selon la revendication 6, comprenant en outre,
l'envoi des informations relatives à la configuration de la première mise à jour du service à l'OLT (S301), afin d'amener l'OLT à effectuer une mise à jour de configuration en fonction des informations relatives à la configuration de la première mise à jour du service ; et
l'envoi des informations relatives à la configuration de la deuxième mise à jour du service au terminal mobile (S303), afin d'amener le terminal mobile à envoyer une demande de configuration de mise à jour contenant les informations relatives à la configuration de la deuxième mise à jour du service à l'ONU.

10. Dispositif électronique (70), comprenant,
une mémoire (72) configurée pour stocker un programme ; et
un processeur (71) configuré pour exécuter le programme qui, lorsqu'il est exécuté par le processeur (71), amène le processeur (71) à mettre en œuvre le procédé selon l'une quelconque des revendications 1 à 9.

11. Support de stockage lisible par ordinateur, stockant un programme exécutable par ordinateur qui, lorsque exécuté par un processeur, amène ce dernier à mettre en œuvre le procédé selon l'une quelconque des revendications 1 à 9.

12. Programme informatique comprenant des instructions qui, lorsque le programme est exécuté par un ordinateur, amènent l'ordinateur à mettre en œuvre le procédé selon l'une des revendications 1 à 9.
